# FASCICULE DE BREVET EUROPEEN

(11) **EP 1 288 562 B1**
(45) Date de publication et mention de la délivrance du brevet: **02.09.2009**
(21) Numéro de dépôt: 02292106.8
(22) Date de dépôt: 27.08.2002
(51) Int. Cl.: F21S 8/10, F21S 8/12

(54) **Dispositif d'éclairage ou de signalisation pour véhicule automobile**
Beleuchtungs- oder Signalvorrichtung für Fahrzeug
Lighting or signalling device for motor vehicle

(30) Priorité: 31.08.2001 FR 0111448
(43) Date de publication de la demande: 05.03.2003
(73) Titulaire: VALEO VISION, 93012 Bobigny Cedex (FR)
(72) Inventeur: Aynie, Jean-Pierre, 93310 Le Pre Saint Gervais (FR); Fleury, Benoist, 94300 Vincennes (FR); Brun, Norbert, 77600 Guermantes (FR); Blusseau, Eric, 49000 Angers (FR)

(56) Documents cités:
- EP-A- 0 940 625
- EP-A- 1 126 209
- WO-A-90/15953
- DE-A- 10 000 992
- DE-A- 19 713 385
- FR-A- 2 804 493
- US-A- 5 165 772
- US-A- 5 745 266

## Description

La présente invention concerne les dispositifs d'éclairage ou de signalisation pour véhicules automobiles, et plus particulièrement ceux qui sont du type qui comportent plusieurs fonctions lumineuses.

Il est courant de rassembler dans un seul boîtier plusieurs fonctions d'éclairage ou de signalisation, comme par exemple dans le document EP 1 126 209 A, de manière à simplifier le câblage électrique de ces différentes fonctions dans un véhicule automobile. Chaque fonction comporte une source lumineuse, un réflecteur et éventuellement une glace, ces différents éléments étant agencés pour fournir un faisceau d'éclairage ou de signalisation dont les caractéristiques géométriques et photométriques doivent être conformes à différentes réglementations.

Chaque fonction nécessite ainsi un volume minimal pour son implantation dans un dispositif d'éclairage ou de signalisation particulier. Cependant, le volume disponible pour implanter des dispositifs d'éclairage ou de signalisation est de plus en plus réduit aussi bien à l'avant qu'à l'arrière d'un véhicule automobile moderne. En effet, les contraintes de l'aérodynamique et les conceptions des stylistes conduisent à des formes souvent très différentes de celles qui résultent uniquement de considérations techniques. Il en résulte que dans de nombreux cas, l'espace disponible pour regrouper ces fonctions dans un même boîtier est insuffisant, et qu'il est alors nécessaire de répartir différentes fonctions dans des boîtiers différents, d'où un accroissement du coût et une augmentation du temps de câblage et de montage.

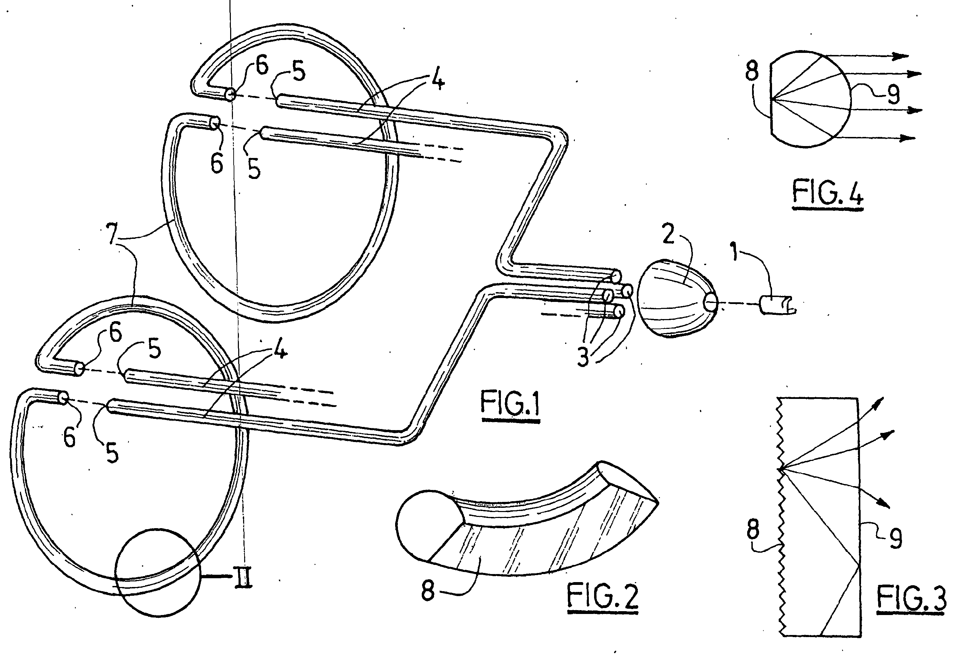

On a déjà tenté de résoudre ce problème en utilisant des guides de lumière. On a représenté sur les Figures 1 à 4 un exemple d'un dispositif mettant en oeuvre une telle solution. On voit sur la Figure 1 qu'une lampe 1 est destinée à être montée dans un réflecteur 2 de manière à concentrer les rayons lumineux issus de la lampe 1 sur la face d'entrée 3 de fibres optiques ou de groupes de fibres optiques 4. Le réflecteur 2 est par exemple du type elliptique, la source lumineuse de la lampe 1 étant placée au voisinage d'un premier foyer du réflecteur 2, les faces 3 étant disposées au voisinage du deuxième foyer du réflecteur 2. Les faces de sorties 5 des fibres optiques 4 sont couplées aux faces d'entrée 6 de guides de lumière 7.

Les guides de lumière 7, dans l'exemple représenté, sont configurés pour s'étendre selon un motif circulaire, et ils sont disposés par exemple de manière à entourer le périmètre avant d'un projecteur de faisceau de croisement. Les guides de lumière 7 sont par exemple conformes à ceux qui sont décrits dans le document DE-A-41 29 094. Ils comportent, comme on le voit mieux sur la Figure 2, une face 8 sensiblement plane de réflexion de la lumière, et une face 9, cylindrique ou torique, de répartition de la lumière. La face 8 est formée d'une succession de prismes qui renvoient les rayons lumineux se propageant dans le guide vers la face 9 (Figure 3), qui en fournit un faisceau de sortie formé de rayons sensiblement parallèles, comme on le voit sur la Figure 4. Le faisceau de sortie peut par exemple remplir la fonction de lampe de ville dans un projecteur.

Une telle solution est particulièrement onéreuse, puisqu'elle nécessite une source lumineuse telle qu'une lampe à halogènes, un réflecteur elliptique, un faisceau souple de fibres optiques et un guide de lumière rigide en verre ou en matière plastique. De plus, il existe toujours un espace vide entre les deux extrémités du guide de lumière par lesquelles la lumière est injectée dans le guide, cet espace vide étant nuisible à l'esthétique de l'ensemble ainsi réalisé. D'autre part, une telle solution ne permet pas de réaliser des motifs présentant des angles prononcés, car la propagation de la lumière dans le guide de lumière serait interrompue au niveau des angles.

Une autre solution pourrait consister à remplacer le guide de lumière 7 par un tube fluorescent, moins onéreux et permettant des tracés avec des angles importants, mais laissant toutefois subsister un espace vide entre ses deux extrémités.

La présente invention se place dans ce contexte et elle a pour but de proposer un dispositif d'éclairage ou de signalisation qui permette facilement d'intégrer une fonction d'éclairage et de signalisation dans un projecteur, un tel dispositif d'éclairage ou de signalisation devant en outre être simple à assembler, fiable dans son fonctionnement, les performances photométriques répondant à la réglementation en vigueur, un tel dispositif devant en outre être peu onéreux et répondre à toutes les exigences en matière de style en pouvant prendre n'importe quelle forme.

L'invention a donc pour objet un dispositif d'éclairage ou de signalisation pour véhicule automobile, comportant au moins un guide de lumière associé à au moins une source lumineuse pour transporter les rayons lumineux issus de la source lumineuse et pénétrant dans le guide de lumière par une face d'entrée vers une face de sortie en passant par une section intermédiaire de transport des rayons lumineux, la face de sortie du guide de lumière s'inscrivant entre deux lignes fermées délimitant un contour intérieur continu et un contour extérieur continu.

Selon la présente invention, la face d'entrée du guide de lumière s'inscrit entre deux lignes fermées délimitant un contour intérieur continu et un contour extérieur continu, et les surfaces de la section intermédiaire de transport des rayons lumineux comportent des portions de paraboloïde.

Selon d'autres caractéristiques de la présente invention :
- la face d'entrée a la même forme que la face de sortie ;
- le guide de lumière adopte la forme d'un tronc de cône ou de tronc de pyramide ;
- la section intermédiaire est constituée d'un bloc de matériau transparent formant un volume continu entre la face d'entrée et la face de sortie ;
- le guide de lumière est associé à plusieurs sources lumineuses ;

Selon un mode de réalisation, les sources lumineuses comprennent au moins une lampe à incandescence. Dans ce cas, au moins un dispositif optique est associé à la lampe à incandescence pour transformer les rayons lumineux issus de la lampe à incandescence en un faisceau de rayons parallèles, et la face d'entrée du guide de lumière en regard de la lampe à incandescence est plane.

En variante, la lampe à incandescence est disposée directement en arrière de la face d'entrée, et la face d'entrée du guide de lumière est convexe.

Selon un autre mode de réalisation, les sources lumineuses comprennent au moins une diode électroluminescente. Dans ce cas, on peut prévoir que :
- la diode électroluminescente est disposée directement en arrière de la face d'entrée, et la face d'entrée du guide de lumière est convexe.
- au moins un dispositif optique est associé à la diode électroluminescente pour répartir le flux lumineux issu de la diode électroluminescente de manière homogène selon toutes les directions perpendiculaires à un axe optique parallèle à l'axe optique du guide de lumière, et la face d'entrée du guide de lumière en regard de la diode électroluminescente est globalement plane et comporte des prismes de Fresnel.

Ces modes de réalisation s'appliquent lorsque le dispositif d'éclairage ou de signalisation comporte plusieurs guides de lumière emboîtés les uns dans les autres. On pourra alors prévoir que les faces d'entrée des guides de lumière soient situées au voisinage d'un même plan d'entrée, et/ou que les faces de sortie des guides de lumière soient situées au voisinage d'un même plan de sortie.

D'autres buts, caractéristiques et avantages de la présente invention ressortiront clairement de la description qui va maintenant être faite d'un exemple de réalisation donné à titre non limitatif en référence aux dessins annexés sur lesquels :
- la Figure 1 déjà commentée représente une vue schématique en perspective d'un mode de réalisation de l'art antérieur ;
- la Figure 2 représente une vue à plus grande échelle du détail II de la Figure 1 ;
- la Figure 3 représente une vue en coupe longitudinale du guide de lumière des Figures 1 et 2;
- la Figure 4 représente une vue en coupe transversale du guide de lumière des Figures 1 et 2;

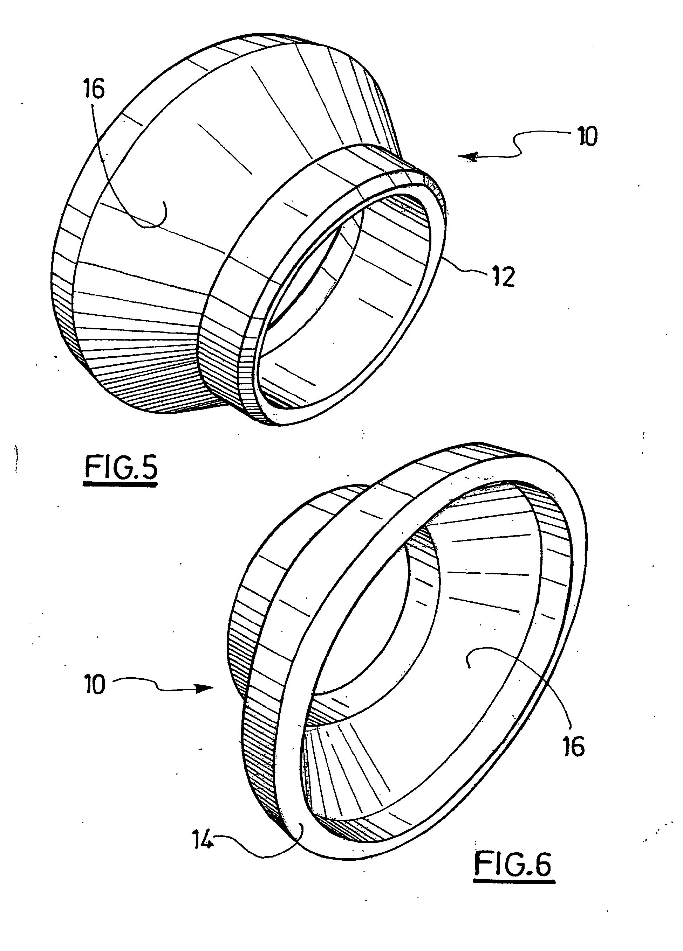

- la Figure 5 représente une vue en perspective de trois quarts arrière du guide de lumière réalisé selon la présente invention ;
- la Figure 6 représente une vue en perspective de trois quarts avant du guide de lumière réalisé selon la présente invention ;

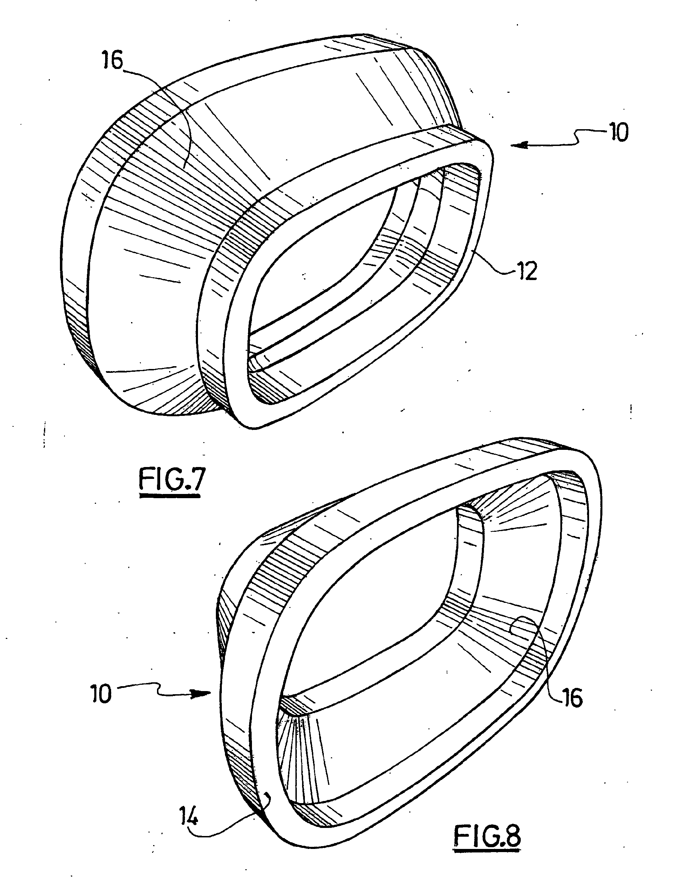

- la Figure 7 représente une vue analogue à celle de la Figure 5 en perspective de trois quarts arrière d'un autre mode de réalisation du guide de lumière de la présente invention ;
- la Figure 8 représente une vue analogue à celle de la Figure 6 en perspective de trois quarts avant de l'autre mode de réalisation du guide de lumière de la présente invention ;

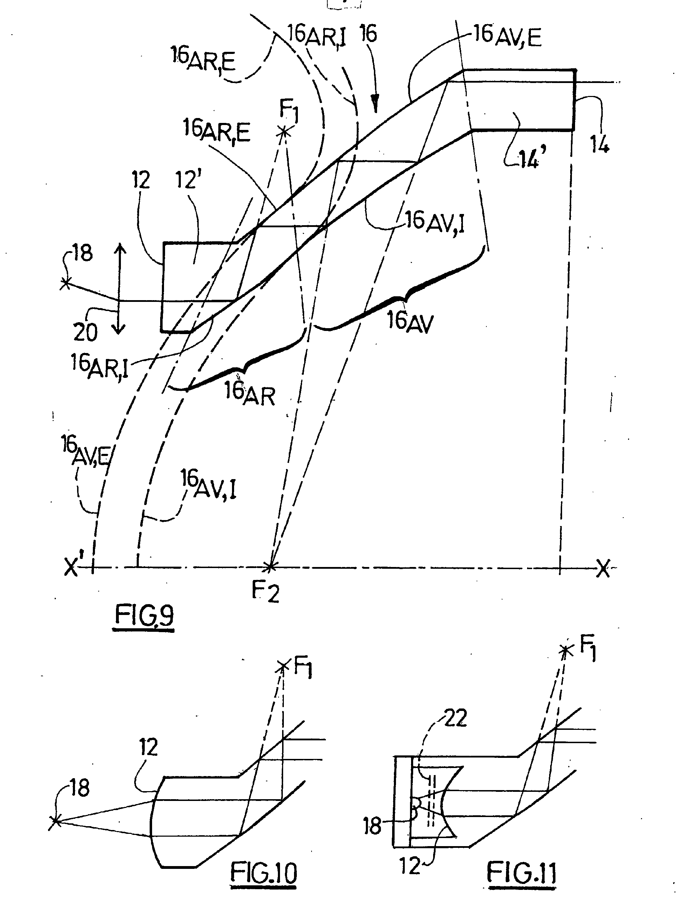

- la Figure 9 représente une vue en coupe axiale du guide de lumière de l'invention, selon une première variante de réalisation ;
- la Figure 10 représente une vue en coupe axiale du guide de lumière de l'invention, selon une deuxième variante de réalisation ;
- la Figure 11 représente une vue en coupe axiale du guide de lumière de l'invention, selon une troisième variante de réalisation ;

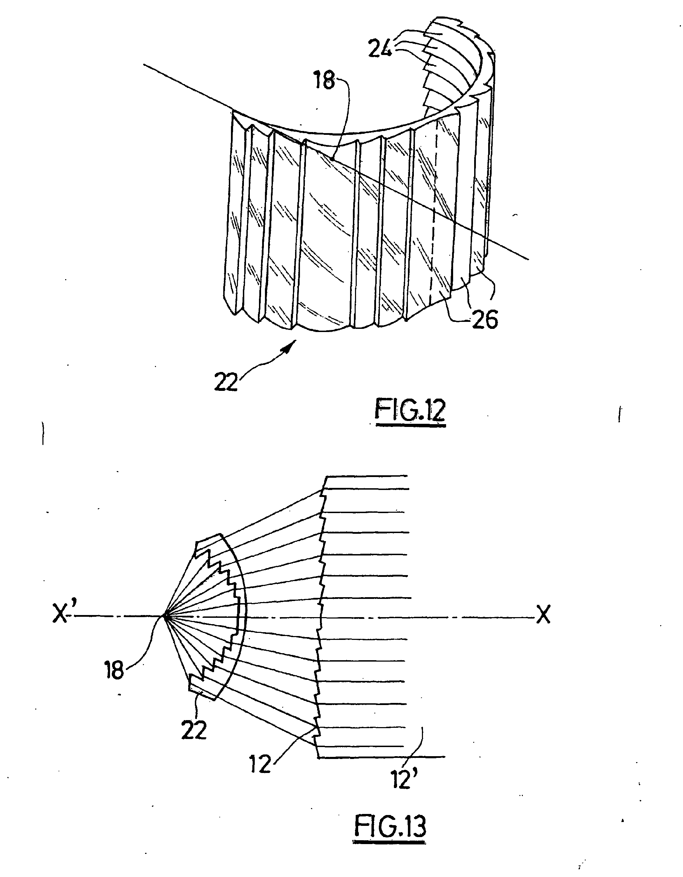

- la Figure 12 représente une bonnette susceptible d'être utilisée avec la troisième variante de réalisation de la Figure 11;
- la Figure 13 représente une vue de côté de la troisième variante de réalisation de la Figure 11 munie de la bonnette de la Figure 12 ;

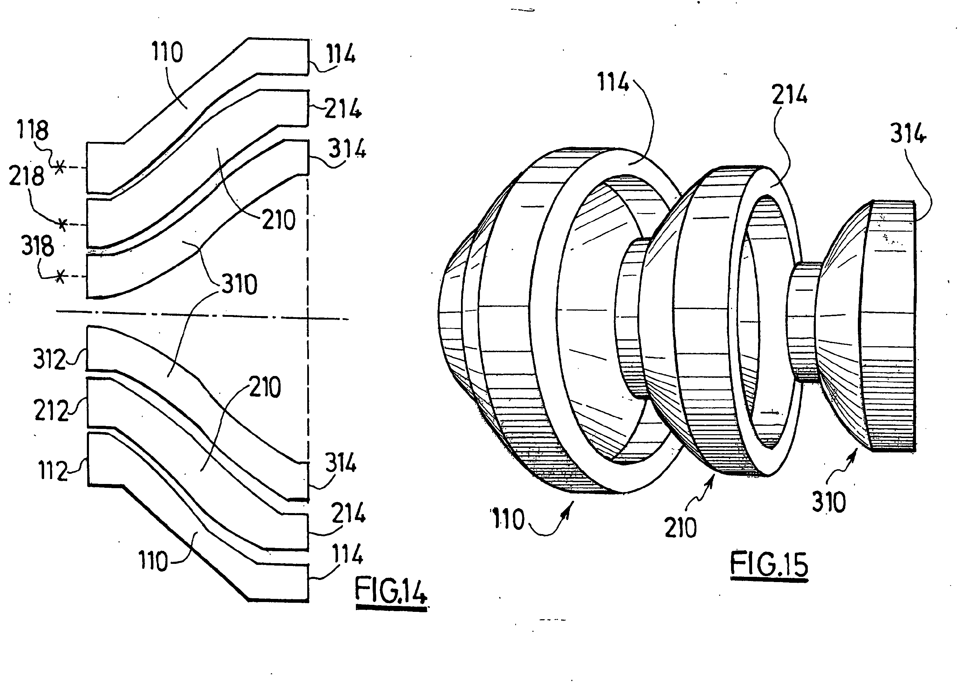

- la Figure 14 représente une vue en coupe de trois guides selon la présente invention, emboîtés les uns dans les autres, et
- la Figure 15 représente une vue en perspective éclatée des trois guides de la Figure 14.

Par convention, dans la présente description, on appelle « avant » la direction dans laquelle le faisceau lumineux émergeant est émis, et « arrière » la direction opposée.

On a représenté sur les Figures 5 et 6 des vues en perspective du guide de lumière réalisé selon la présente invention, destiné à être utilisé dans un dispositif d'éclairage ou de signalisation pour véhicule automobile. Le guide de lumière, désigné dans son ensemble par la référence 10, comporte une face d'entrée 12, une face de sortie 14, et une section intermédiaire 16.

De manière avantageuse, la face d'entrée 12 a la même forme que la face de sortie 14, par exemple annulaire dans les Figures 5 et 6, ou rectangulaire dans les Figures 7 et 8, et elle est de dimensions plus réduites que celles de la face de sortie. Sur les Figures 5 et 6, le guide de lumière 10 adopte ainsi la forme d'un tronc de cône, tandis que sur les Figures 7 et 8, il adopte la forme d'un tronc de pyramide, par exemple à base rectangulaire, avec des coins plus ou moins arrondis.

La face d'entrée 12 est apte à recevoir les rayons lumineux émis par une source lumineuse 18. Comme on l'a représenté sur la Figure 9, la face d'entrée 12 peut être plane, et recevoir les rayons de la source 18 après qu'ils aient été transformés par un objectif 20 en un faisceau de rayons parallèles. Sur les variantes représentées sur les Figures 10 et 11, la face d'entrée 12 est convexe, de manière à recevoir directement les rayons lumineux émis par la source 18 et à les transformer elle-même en un faisceau de rayons essentiellement parallèles. Sur la Figure 10, la source 18 est le filament d'une lampe à incandescence, qui doit donc être placé à une certaine distance de la face d'entrée 12 si le guide de lumière 10 est réalisé en un matériau plastique, pour éviter l'échauffement de ce dernier. Sur la Figure 11, la source 18 est constituée par une diode électroluminescente, ce qui permet de la placer à proximité immédiate de la face d'entrée 12. L'encombrement axial de cette dernière variante est notablement inférieur à celui des variantes des Figures 9 et 10, et pourra la faire préférer pour certaines applications.

Selon les trois variantes des Figures 9 à 11, les rayons lumineux se propageant dans le guide de lumière 10 après la traversée de la face d'entrée 12 forment tous un faisceau de rayons essentiellement parallèles. Un seul de ces rayons a été représenté sur la Figure 9 par souci de clarté. Un tel faisceau parallèle est alors incident sur la face interne de la section intermédiaire 16.

La face d'entrée 12 peut être suivie immédiatement de la section intermédiaire 16, ou être reliée à cette dernière par un prolongement cylindrique 12', qui n'altère en rien la marche des rayons lumineux parallèles. Il en est de même de la face de sortie 14, qui peut suivre immédiatement la section intermédiaire, ou être précédée d'un prolongement cylindrique 14', qui n'altère en rien la marche des rayons lumineux parallèles comme on le verra par la suite.

De manière plus précise, la section interne 16 est formée de deux sous sections, une section arrière 16_{AR} et une section avant 16_{AV}, délimitées par des traits mixtes sur la Figure 9. Chaque sous section 16_{AR} et 16_{AV} comporte une surface interne 16_{AR,I} et 16_{AV,I} et une surface externe 16_{AR,E} et 16_{AV,E}.

Dans le cas d'un guide de lumière tronconique tel que celui qui est représenté sur les Figures 5 et 6, les surfaces 16_{AR,I} et 16_{AR,E} de la section arrière 16_{AR} sont des portions de paraboloïdes de révolution dont les foyers F₁ sont situés sur un cercle centré sur l'axe optique X'-X du guide de lumière, qui s'appuient sur les contours intérieur et extérieur de la face d'entrée 12, et dont les prolongements ont été représentés en tiretés. De même, les surfaces 16_{AV,I} et 16_{AV,E} de la section avant 16_{AV} sont des portions de paraboloïdes de révolution dont le foyer F₂ est situé sur l'axe optique X'-X du guide de lumière, qui s'appuient sur les contours intérieur et extérieur de la face de sortie 14, et dont les prolongements ont été représentés en tiretés.

On a vu plus haut que les rayons lumineux se propageant dans le guide de lumière 10 après la traversée de la face d'entrée 12 forment tous un faisceau de rayons essentiellement parallèles, incident sur la face interne de la section intermédiaire 16, et plus précisément sur la surface paraboloïde 16_{AR,I}. Cette surface réfléchit donc par réflexion totale les rayons lumineux de manière à ce qu'ils convergent, dans chaque plan passant par l'axe optique X'-X, vers les foyers F₁. Avant d'atteindre ces foyers, ils sont reçus par la surface paraboloïde 16_{AR,E}, de même foyer F₁. Les rayons lumineux sont alors réfléchis par cette dernière surface par réflexion totale pour donner naissance à un nouveau faisceau de rayons parallèles.

Les rayons lumineux pénètrent alors dans la section avant 16_{AV}, où les mêmes phénomènes de réflexion totale se produisent sur la surface interne 16_{AV,I}, qui réfléchit ces rayons en un faisceau divergent dont la source virtuelle est le foyer F₂, et sur la surface externe 16_{AV,E}, qui réfléchit ces rayons en un faisceau de rayons parallèles.

Les rayons lumineux parviennent ainsi sur la face de sortie 14, éventuellement précédée du prolongement 14', sous forme d'un faisceau de rayons parallèles. Ils peuvent donc émerger du guide de lumière 10 pour former un faisceau lumineux émergeant. On pourra avantageusement prévoir que la face de sortie 14 soit dépolie, de façon à assurer une diffusion contrôlée du faisceau lumineux émergeant.

De manière à ce que le faisceau émergeant de la face de sortie 14 soit le plus homogène possible, il sera possible de disposer plusieurs sources lumineuses, régulièrement disposées en regard de la face d'entrée 12. En fonction du diagramme d'émission des sources lumineuses utilisées, leur nombre pourra varier. Par exemple, pour des sources lumineuses à émission lambertienne, trois ou quatre sources seront suffisantes pour un guide de lumière en forme de tronc de cône. Par contre, pour des sources à émission spéculaire, c'est à dire à indicatrice étroite, comme des diodes électroluminescentes, un nombre plus grand de sources sera requis.

Avantageusement, pour réduire le nombre de diodes électroluminescentes, on pourra disposer entre ces dernières et la face d'entrée 12 du guide de lumière, un dispositif répartiteur de flux, tel que celui qui est illustré sur les Figures 12 et 13, et représenté en pointillés sur la Figure 11. Un tel dispositif est constitué d'une bonnette 22, de forme sensiblement cylindrique, de répartition des rayons lumineux issus de la diode électroluminescente 18.

La bonnette 22 est munie sur sa face arrière de stries 24 répartissant le flux lumineux dans une première direction, et sur sa face avant de stries 26 répartissant le flux lumineux dans une deuxième direction perpendiculaire à la première direction. La face d'entrée 12 est convexe, ou, comme on l'a représenté sur la Figure 13, globalement plane et comportant des prismes de Fresnel de façon à ce que les rayons lumineux ayant traversé cette face d'entrée soient tous parallèles. Une telle disposition a pour résultat que le flux après la traversée de la face d'entrée 12 est homogène selon toutes les directions perpendiculaires à l'axe x'x d'émission de la diode électroluminescente, parallèle à l'axe X'-X du guide de lumière 10. Un tel dispositif répartiteur de flux est connu, par exemple des documents FR-A-2 614 969 ou FR-A-2 776 595, et ne sera donc pas détaillé plus avant.

On a donc bien réalisé un dispositif d'éclairage ou de signalisation qui permet facilement de disposer une fonction d'éclairage et de signalisation supplémentaire dans un projecteur, cette fonction supplémentaire pouvant avoir toute forme souhaitée, par exemple ronde, rectangulaire, triangulaire, ovale, etc.., s'inscrivant entre deux lignes fermées délimitant un contour intérieur continu et un contour extérieur continu sans interruption

En effet, il est facile de choisir la forme et les dimensions du guide de lumière 10, c'est à dire de définir les paramètres du couple de paraboloïdes 16_{AV,I} et 16_{AV,E} de la section avant 16_{AV} ayant pour foyer commun F₂ pour que le guide de lumière 10 s'intègre facilement dans l'espace libre à l'arrière de la fonction à entourer sans en perturber le fonctionnement..

Les sources lumineuses placées derrière la face d'entrée 12 peuvent être commandées indépendamment de la source lumineuse de la fonction d'éclairage placée à l'intérieur du guide de lumière 10. On pourra ainsi par exemple obtenir une fonction « lampe de ville » autour d'une fonction « feu de croisement » sans qu'il soit nécessaire de prévoir dans cette dernière fonction un emplacement pour la lampe de ville, qui est toujours pénalisant pour la fonction ainsi perturbée ainsi que pour l'esthétique générale du projecteur. On pourra ainsi ajouter la fonction lampe de ville dans un dispositif d'éclairage ou de signalisation, sans en accroître l'encombrement, ni en modifier le réflecteur.

Dans certaines applications, il sera même possible de prévoir que au moins la surface interne 16_{AV,I} de la section intermédiaire 16 du guide de lumière 10 soit métallisée, de sorte que cette surface interne serve en même temps de réflecteur pour une source lumineuse située au foyer F₂ du paraboloïde constituant la surface interne 16_{AV,I}. On obtiendra ainsi une structure de miroir réflecteur, par exemple pour un éclairage de route, avec une source lumineuse placée en F₂, remplissant une autre fonction, par exemple une lampe de ville, dans la matière même de ce réflecteur.

Un exemple de réalisation a montré que la différence entre les distances focales des surfaces 16_{AV,I} et 16_{AV,E} est de l'ordre de 3 à 4 millimètres. Les paramètres du couple de paraboloïdes 16_{AR,I} et 16_{AR,E} de la section arrière 16_{AR} ayant pour foyer commun F₁ se déduisent de ceux du couple de paraboloïdes 16_{AV,I} et 16_{AV,E}, et leur sont de 3 à 4 fois inférieurs. Il en résulte que le guide de lumière 10 pourra facilement être fabrique par moulage par injection, les épaisseurs de matière étant inférieures à 4 millimètres. Des matériaux se prêtant particulièrement bien à de tels moulages sont le polyméthylemétacrylate (PMMA) ou le polycarbonate (PC). Le guide de lumière 10 est ainsi constitué, depuis la face d'entrée 12 jusqu'à la face de sortie 14, d'un bloc de matériau transparent formant un volume continu.

On pourra ainsi, comme on l'a représenté sur la Figure 14, disposer plusieurs guides de lumière 110, 210, 310 selon l'invention, de manière à ce qu'ils s'emboîtent les uns dans les autres. On a représenté sur la Figure 15 une vue en perspective des trois guides de la Figure 14, avant qu'ils ne soient emboîtés les uns dans les autres. De préférence, leurs faces d'entrée 112, 212, 312 sont situées dans un même plan d'entrée, ou elles sont au voisinage d'un même plan d'entrée. De même, leurs faces de sortie 114, 214 et 314 sont situées dans un même plan de sortie, ou elles sont au voisinage d'un même plan de sortie. Chaque guide de lumière 110, 210 et 310 est associé à des sources lumineuses ou des ensembles de sources lumineuses 118, 218, 318, dont les alimentations sont commandées séparément les unes des autres.

Il est ainsi possible de réunir plusieurs fonctions d'éclairage ou de signalisation emboîtées les unes dans les autres, de manière concentrique dans le cas des Figures 14 et 15 en utilisant plusieurs guides de lumière selon les Figures 5 et 6, ou dessinant d'autres motifs si on utilise par exemple des guides de lumière selon les Figures 7 et 8. Chaque fonction peut ainsi avoir la couleur réglementaire pour laquelle elle est prévue, à savoir blanche, ambre ou rouge. L'avantage présenté par une telle disposition de fonctions emboîtées est que, lorsque les sources lumineuses sont éteintes, les faces de sortie présentent une même couleur, indépendante de la couleur de la fonction remplie lorsque la source lumineuse est allumée.

On pourra également prévoir que toutes les sources lumineuses des différents guides emboîtés les uns dans les autres de lumière soient affectées à la même fonction d'éclairage ou de signalisation, mais à des degrés divers. On pourra par exemple prévoir que les sources lumineuses soient affectées à la fonction de feu de stop, et que les sources associées au guide de lumière dont la face de sortie de plus petit diamètre soient allumées en premier, les sources de lumière associées aux autres guides de lumière étant allumées progressivement en fonction de l'intensité du freinage. On obtiendra alors une fonction de signalisation dont la surface allumée sera d'autant plus importante que le freinage sera intense, fournissant ainsi une indication supplémentaire au conducteur d'un véhicule suivant le véhicule ainsi équipé.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple qu'on pourra utiliser simultanément comme sources lumineuses des lampes à incandescence et des diodes électroluminescentes, les lampes à incandescence étant associées ou non à des dispositifs optiques pour collimater les rayons lumineux sur la face d'entrée du guide de lumière. Un tel mélange de sources lumineuses pourra être effectué en fonction d'effets esthétiques particuliers recherchés.

## Revendications

1. Dispositif d'éclairage ou de signalisation pour véhicule automobile, comportant au moins un guide de lumière (10) associé à au moins une source lumineuse (18) pour transporter les rayons lumineux issus de la source lumineuse (18) et pénétrant dans le guide de lumière (10) par une face d'entrée (12) vers une face de sortie (14) en passant par une section intermédiaire (16) de transport des rayons lumineux, la face de sortie (14) du guide de lumière (10) s'inscrivant entre deux lignes fermées délimitant un contour intérieur continu et un contour extérieur continu, **caractérisé en ce que** la face.d'entrée (12) du guide de lumière (10) s'inscrit entre deux lignes fermées délimitant un contour intérieur continu et un contour extérieur continu, **et en ce que** les surfaces (16_{AR,I}, 16_{AR,E}, 16_{AV,I}, 16_{AV,E}) de la section intermédiaire (16) de transport des rayons lumineux comportent des portions de paraboloïdes.

2. Dispositif selon la revendication 1, **caractérisé en ce que** la face d'entrée (12) a la même forme que la face de sortie (14).

3. Dispositif selon la revendication 2, **caractérisé en ce que** le guide de lumière (10) adopte la forme d'un tronc de cône ou de tronc de pyramide.

4. Dispositif selon l'une quelconque des revendications 1 à 3, **caractérisé en ce que** la section intermédiaire (16) est constituée d'un bloc de matériau transparent formant un volume continu entre la face d'entrée (12) et la face de sortie (14).

5. Dispositif selon l'une des revendications l'une quelconque des revendications 1 à 4, **caractérisé en ce que** le guide de lumière (10) est associé à plusieurs sources lumineuses (18).

6. Dispositif selon la revendication 5, **caractérisé en ce que** les sources lumineuses (18) comprennent au moins une lampe à incandescence (18).

7. Dispositif selon la revendication 6, **caractérisé en ce qu'**au moins un dispositif optique (20) est associé à la lampe à incandescence (18) pour transformer les rayons lumineux issus de la lampe à incandescence (18) en un faisceau de rayons parallèles, et **en ce que** la face d'entrée (12) du guide de lumière (10) en regard de la lampe à incandescence (18) est plane.

8. Dispositif selon la revendication 6, **caractérisé en ce que** la lampe à incandescence (18) est disposée directement en arrière de la face d'entrée (12), et **en ce que** la face d'entrée (12) du guide de lumière (10) est convexe.

9. Dispositif selon la revendication 5, **caractérisé en ce que** les sources lumineuses (18) comprennent au moins une diode électroluminescente (18).

10. Dispositif selon la revendication 9, **caractérisé en ce que** la diode électroluminescente (18) est disposée directement en arrière de la face d'entrée (12), et **en ce que** la face d'entrée (12) du guide de lumière (10) est convexe.

11. Dispositif selon la revendication 9, **caractérisé en ce qu'**au moins un dispositif optique (22) est associé à la diode électroluminescente (18) pour répartir le flux lumineux issu de la diode électroluminescente (18) de manière homogène selon toutes les directions perpendiculaires à un axe optique (x'-x) parallèle à l'axe optique (X'-X) du guide de lumière (10), et **en ce que** la face d'entrée (12) du guide de lumière (10) en regard de la diode électroluminescente (18) est globalement plane et comporte des prismes de Fresnel..

12. Dispositif selon l'une quelconque des revendications précédentes, **caractérisé en ce qu'**il comporte plusieurs guides de lumière (110, 210, 310) emboîtés les uns dans les autres.

13. Dispositif selon la revendication 12, **caractérisé en ce que** les faces d'entrée (112, 212, 312) des guides de lumière (110, 210, 310) sont situées au voisinage d'un même plan d'entrée.

14. Dispositif selon la revendication 12, **caractérisé en ce que** les faces de sortie (114, 214, 314) des guides de lumière (110, 210, 310) sont situées au voisinage d'un même plan de sortie.

## Claims

1. Lighting or signalling device for a motor vehicle, comprising at least one light guide (10) which is associated with at least one source of light (18), in order to convey the rays of light which are obtained from the source of light (18) and penetrate in the light guide (10) via an intake face (12) towards an output face (14) whilst passing via an intermediate section (16) for conveying the light rays, the output face (14) of the light guide (10) being contained between two closed lines which delimit a continuous interior contour and a continuous exterior contour, **characterised in that** the intake face (12) of the light guide (10) is contained between two closed lines which delimited a continuous interior contour and a continuous exterior contour, and **in that** the surfaces (16_{AR,J}, 16_{AR,E,} 16_{AV,I}, 16_{AV,E}) of the intermediate section (16) for conveying the light rays comprise paraboloid portions.

2. Device according to claim 1, **characterised in that** the intake face (12) has the same form as the output face (14).

3. Device according to claim 2, **characterised in that** the light guide (10) is in the form of a truncated cone or a truncated pyramid.

4. Device according to any one of claims 1 to 3, **characterised in that** the intermediate section (16) consists of a block of transparent material which forms a continuous volume between the intake face (12) and the output face (14).

5. Device according to any one of claims¹ 1 to 4, **characterised in that** the light guide (10) is associated with a plurality of sources of light (18).
¹ Translator's note: The French actually says at this point "one of claims any one of claims 1 to 4", but this is clearly a mistake and the "one of claims" can be deleted from the English.

6. Device according to claim 5, **characterised in that** the light sources (18) comprise at least one incandescent lamp (18).

7. Device according to claim 6, **characterised in that** at least one optical device (20) is associated with the incandescent lamp (18) in order to transform the rays of light obtained from the incandescent lamp (18) into a beam of parallel rays, and **in that** the intake face (12) of the light guide (10) opposite the incandescent lamp (18) is flat.

8. Device according to claim 6, **characterised in that** the incandescent lamp (18) is disposed directly to the rear of the intake face (12), and **in that** the intake face (12) of the light guide (10) is convex.

9. Device according to claim 5, **characterised in that** that the light sources (18) comprise at least one electroluminescent diode (18).

10. Device according to claim 9, **characterised in that t**he electroluminescent diode (18) is disposed directly to the rear of the intake face (12), and **in that** the intake face (12) of the light guide (10) is convex.

11. Device according to claim 9, **characterised in that** that at least one optical device (22) is associated with the electroluminescent diode (18) in order to distribute the flow of light which is obtained from the electroluminescent diode (18) homogenously in all the directions perpendicular to an optical axis (x' - x) which is parallel to the optical axis (X' - X) of the light guide (10), and **in that** the intake face (12) of the light guide (10) opposite the electroluminescent diode (18) is globally flat and comprises Fresnel prisms.

12. Device according to any one of the preceding claims, **characterised in that** it comprises a plurality of light guides (110, 210, 310) which are fitted in one another.

13. Device according to claim 12, **characterised in that** the intake faces (112, 212, 312) of the light guides (110, 210, 310) are situated in the vicinity of a single intake plane.

14. Device according to claim 12, **characterised in that** the output faces (114, 214, 314) of the light guides (110, 210, 310) are situated in the vicinity of a single output plane.

## Patentansprüche

1. Beleuchtungs- oder Signalgebungsvorrichtung für Kraftfahrzeuge, mit wenigstens einem Lichtleiter (10), der wenigstens einer Lichtquelle (18) zugeordnet ist, um die von der Lichtquelle (18) abgegebenen und in den Lichtleiter (10) durch eine Eintrittsfläche (12) eintretenden Lichtstrahlen unter Durchlaufen eines dazwischen liegenden Abschnitts (16) zur Übertragung der Lichtstrahlen zu einer Austrittsfläche (14) zu übertragen, wobei sich die Austrittsfläche (14) des Lichtleiters (10) zwischen zwei geschlossenen, einen durchgehenden Innenumfang und einen durchgehenden Außenumfang begrenzenden Linien einpasst,
**dadurch gekennzeichnet, dass** sich die Eintrittsfläche (12) des Lichtleiters (10) zwischen zwei geschlossenen, einen durchgehenden Innenumfang und einen durchgehenden Außenumfang begrenzenden Linien einpasst, und dass die Oberflächen (16_{AR,I}, 16_{AR,E}, 16_{AV,I}, 16_{AV,E}) des dazwischen liegenden Abschnitts (16) zur Übertragung der Lichtstrahlen Paraboloid-Bereiche aufweisen.

2. Vorrichtung nach Anspruch 1,
**dadurch gekennzeichnet, dass** die Eintrittsfläche (12) die gleiche Form hat wie die Austrittsfläche (14).

3. Vorrichtung nach Anspruch 2,
**dadurch gekennzeichnet, dass** der Lichtleiter (10) die Form eines Kegelstumpfs oder Pyramidenstumpfs hat.

4. Vorrichtung nach einem der Ansprüche 1 bis 3,
**dadurch gekennzeichnet, dass** der dazwischen liegende Abschnitt (16) aus einem Block lichtdurchlässigen Materials gebildet ist, der zwischen der Eintrittsfläche (12) und der Austrittsfläche (14) ein durchgehendes Volumen bildet.

5. Vorrichtung nach einem der Ansprüche 1 bis 4,
**dadurch gekennzeichnet, dass** der Lichtleiter (10) mehreren Lichtquellen (18) zugeordnet ist.

6. Vorrichtung nach Anspruch 5,
**dadurch gekennzeichnet, dass** die Lichtquellen (18) wenigstens eine Glühlampe (18) umfassen.

7. Vorrichtung nach Anspruch 6,
**dadurch gekennzeichnet, dass** wenigstens eine optische Vorrichtung (20) der Glühlampe (18) zugeordnet ist, um die von der Glühlampe (18) abgegebenen Lichtstrahlen in ein Bündel paralleler Strahlen umzuwandeln, und dass die Eintrittsfläche (12) des Lichtleiters (10) gegenüber der Glühlampe (18) eben ist.

8. Vorrichtung nach Anspruch 6,
**dadurch gekennzeichnet, dass** die Glühlampe (18) unmittelbar hinter der Eintrittsfläche (12) angeordnet ist, und dass die Eintrittsfläche (12) des Lichtleiters (10) konvex ist.

9. Vorrichtung nach Anspruch 5,
**dadurch gekennzeichnet, dass** die Lichtquellen (18) wenigstens eine Leuchtdiode (18) umfassen.

10. Vorrichtung nach Anspruch 9,
**dadurch gekennzeichnet, dass** die Leuchtdiode (18) unmittelbar hinter der Eintrittsfläche (12) angeordnet ist, und dass die Eintrittsfläche (12) des Lichtleiters (10) konvex ist.

11. Vorrichtung nach Anspruch 9,
**dadurch gekennzeichnet, dass** wenigstens eine optische Vorrichtung (22) der Leuchtdiode (18) zugeordnet ist, um den von der Leuchtdiode (18) abgegebenen Lichtstrom gleichmäßig in alle Richtungen senkrecht zu einer zur optischen Achse (X'-X) des Lichtleiters (10) parallelen optischen Achse (x'-x) zu verteilen, und dass die Eintrittsfläche (12) des Lichtleiters (10) gegenüber der Leuchtdiode (18) allgemein eben ist und Fresnelprismen aufweist.

12. Vorrichtung nach einem der vorhergehenden Ansprüche,
**dadurch gekennzeichnet, dass** sie mehrere ineinandergesteckte Lichtleiter (110, 210, 310) umfasst.

13. Vorrichtung nach Anspruch 12,
**dadurch gekennzeichnet, dass** die Eintrittsflächen (112, 212, 312) der Lichtleiter (110, 210, 310) in der Nähe ein und derselben Eintrittsebene liegen.

14. Vorrichtung nach Anspruch 12,
**dadurch gekennzeichnet, dass** die Austrittsflächen (114, 214, 314) der Lichtleiter (110, 210, 310) in der Nähe ein und derselben Austrittsebene liegen.
